# EUROPEAN PATENT SPECIFICATION

(11) **EP 3 707 284 B1**
(45) Date of publication and mention of the grant of the patent: **07.08.2024**
(21) Application number: 18812478.8
(22) Date of filing: 09.11.2018
(51) Int. Cl.: C22B 3/06, C01B 35/00, C22B 26/12

(54) **MINERAL RECOVERY PROCESS**
VERFAHREN ZUR MINERALGEWINNUNG
PROCÉDÉ DE RECUPÉRATION DE MINÉRAUX

(30) Priority: 09.11.2017 US 201762583643 P; 09.11.2017 AU 2017904543
(43) Date of publication of application: 16.09.2020
(60) Divisional application: 24184751.6
(73) Proprietor: U.S. Borax, Inc., Greenwood Village, CO 80111 (US)
(72) Inventor: PATWARDHAN, Amit, Herriman Utah 84096 (US); DOWNING, Terry, Redfield South Dakota 57469 (US); PATEL, Mahesh, Irvine California 92606 (US); ALAM, Fazlul, Leander Texas 78641 (US); LI, Jun, Baltimore Maryland 21201 (US); DAVIS, Gary, Macleod Victoria 3085 (AU)
(74) Representative: Kilburn & Strode LLP
(86) International application number: PCT/US2018/059952
(87) International publication number: WO 2019/094674

(56) References cited:
- WO-A1-2015/123762
- CN-B- 103 031 448
- US-A1- 2011 097 254
- US-A1- 2013 121 899

## Description

### TECHNICAL FIELD

The present invention relates to a process for recovering valuable products from ore containing boron and lithium.

The present invention relates more particularly although not exclusively to a process for recovering valuable products from jadarite ore.

The valuable products include any one or more than one of boron-containing, lithium-containing and sodium-containing compounds, by way of example only, boric acid, lithium carbonate, lithium hydroxide, sodium sulfate, and sodium borate.

### BACKGROUND ART

As noted above, the present invention relates more particularly although not exclusively to a process for recovering valuable products from jadarite ore.

The term "jadarite ore" is understood herein to mean ore containing jadarite mineral.

The Jadar basin in Serbia has a significant resource of a mineral that contains high boron and lithium concentrations. The mineral has been named jadarite after the Jadar Basin region.

The term "jadarite" is understood herein to mean "jadarite mineral".

The Jadar basin resource also contains several major and minor mineralizations of borates, most notably, NaB (a sodium borate which is predominantly ezcurrite, kernite and tincal), colemanite and searlesite.

The invention applies to all borate and lithium containing minerals that are associated with jadarite, because it is likely that the minerals will be processed with jadarite.

Jadarite is a white, earthy monoclinic silicate mineral having a chemical formula expressed as LiNaB₃SiO₇(OH) or LiNaSiB₃O₇(OH) or Na₂OLi₂O(SiO₂)₂(B₂O₃)₃H₂O.

The invention is concerned with recovering valuable products, including lithium-containing and boron-containing products, from jadarite ore.

The valuable products include, for example, boric acid and lithium carbonate. The valuable products also include, for example, sodium sulfate, lithium hydroxide and sodium borate.

Lithium is used in a vast array of products, most notably, batteries for hybrid and electric cars.

Borates are essential building blocks for heat resistant glass, fibreglass, ceramics, fertilisers, detergents, wood preservatives and many other household and commercial products. They are used in insulation that makes buildings energy-efficient, and to produce TV, computer and smartphone screens.

The above description is not to be taken as an admission of the common general knowledge in USA, Australia or elsewhere.

WO 2015/123762 A1 discloses a method for extracting lithium from a lithium-containing material.

### SUMMARY OF THE DISCLOSURE

According to the present invention, there is provided a process for recovering valuable products from Jaradite ore as set out in the independent claim with optional features of the process set out in the accompanying dependent claims. The invention relates to a process for recovering valuable products from j aradite ore that includes the steps of:
(a) beneficiating a mined or stockpiled jadarite ore and producing a jadarite concentrate,
(b) digesting the concentrate in an acid and taking boron and lithium into solution in a digestion liquor, and,
(c) subsequent steps to separate valuable boron-containing and lithium-containing products from the digestion liquor.

The beneficiation step (a) may include attrition scrubbing mined or stockpiled jadarite ore in an aqueous or other suitable medium under high solids concentration (typically above 50% solids by weight) such that harder minerals like jadarite preferentially slake and attrite softer gangue minerals such as clay, calcite, dolomite, ankerite etc. thereby preferentially reducing the size of the gangue minerals.

The beneficiation step (a) may include a size separation step that separates the gangue minerals degraded during the attrition scrubbing step from jadarite and other harder minerals that remain during the attrition scrubbing step, thereby achieving a grade increase of jadarite in the concentrate.

The digestion step (b) may include digesting the jadarite concentration in sulphuric acid.

The sulphuric acid may be concentrated sulfuric acid.

The subsequent steps (c) may include any suitable series of successive steps to remove valuable products from the digestion liquor.

The selection of the series of steps and the valuable products will depend on a range of factors, including but not limited to requirements for process optimisation.

The valuable products may include any one or more than one of boron-containing, lithium-containing, and sodium-containing products.

The valuable products may include, by way of example only, any of boric acid, lithium carbonate, lithium hydroxide, sodium borate, and sodium sulfate.

The subsequent steps (c) may include precipitating boron-containing and lithium-containing products successively from solution in the digestion liquor.

The subsequent steps (c) may include precipitating or removing non-valuable impurities successively from solution in the digestion liquor.

The subsequent steps (c) may include precipitating boric acid and lithium carbonate successively from solution in the digestion liquor.

The subsequent steps (c) may also include precipitating a sodium-containing product from solution in the digestion liquor.

The subsequent steps (c) may also include precipitating sodium sulfate from solution in the digestion liquor.

The subsequent steps (c) may include precipitating boric acid, lithium carbonate, and sodium sulfate successively from solution in the digestion liquor.

The subsequent steps (c) may include a boric acid crystallisation step.

The boric acid crystallisation step may include evaporating the digestion liquor to increase the boric acid concentration to a predetermined concentration. The predetermined concentration may be any suitable concentration. By way of example, the predetermined concentration may be 20-25% boric acid in the digestion liquor on a weight basis.

The boric acid crystallisation step may include nitrogen blanketing and treatment with reducing and chelating agents such as sodium dithionite, oxalic acid, di-sodium ethylene diamine tretraacetic acid and sulfuric acid in the range of 1-10 g/L prior to crystallization to control iron contamination of the boric acid.

The boric acid crystallisation step may include cooling, for example flash cooling, the digestion liquor to precipitate boric acid crystals from the digestion liquor and separating the boric acid crystals from the digestion liquor.

The flash cooling step may be carried out in multiple stages.

The flash cooling step may cool the digestion liquor to ambient or less than ambient temperature. The temperature may be a minimum of 5°C. The temperature may be a maximum of 35°C. Typically, the temperature is in a range of 15-35 °C.

The subsequent steps (c) may include precipitating boric acid and sodium sulfate decahydrate (Glauber's salt) in the same precipitation vessel.

The boric acid/sodium sulfate decahydrate mix may be passed directly to a sodium sulfate precipitation step.

The boric acid/sodium sulfate decahydrate precipitation step may include partial separation of the boric acid and sodium sulfate decahydrate, either within the precipitation vessel, or in a downstream separation unit, such as a centrifuge.

A boric acid rich stream produced from the partial separation of the boric acid/sodium sulfate decahydrate mix may be returned to the boric acid crystallisation step.

A sodium sulfate decahydrate-rich stream produced from the partial separation of the boric acid/sodium sulfate decahydrate mix may be passed directly to a sodium sulfate precipitation step.

The subsequent steps (c) may include a lithium carbonate crystallisation step.

The lithium carbonate crystallisation step may include precipitating impurities including any one or more than one of Mg, Al, Fe, Si and other heavy metal hydroxides, gypsum and silica from the digestion liquor and separating the precipitates from the digestion liquor.

The lithium carbonate crystallisation step may include evaporating water to increase the lithium concentration in the digestion liquor.

The impurity precipitation step may include adding any one or more than one of calcium carbonate, calcium hydroxide, sodium carbonate and sodium hydroxide in any suitable proportion to the digestion liquor.

The lithium carbonate crystallisation step may include precipitating calcium from the digestion liquor.

The lithium carbonate crystallisation step may include separating calcium precipitates from the digestion liquor.

The process may include purifying lithium carbonate from the lithium carbonate crystallisation step by dissolution in presence of carbon dioxide, filtration to remove insoluble impurities, ion exchange or solvent extraction to remove dissolved impurities, and re-precipitation of lithium carbonate by heating or steam stripping.

The calcium precipitation step may include adding sodium carbonate and/or carbon dioxide to the digestion liquor.

The lithium carbonate crystallisation step may include a solvent extraction step to strip boron from the digestion liquor.

The lithium carbonate crystallisation step may include precipitating lithium carbonate from the digestion liquor by adding sodium carbonate and carbon dioxide in any suitable proportion to the digestion liquor.

The process may include converting lithium carbonate from the lithium carbonate crystallisation step to lithium hydroxide by reacting lithium carbonate with calcium hydroxide or sodium hydroxide, filtration to remove insoluble contaminants and crystallization of lithium hydroxide by evaporation and cooling.

The lithium hydroxide crystals may be separated from the digestion liquor, washed to remove adhering impurities and dried under a carbon dioxide free environment.

The lithium hydroxide product may be produced is re-dissolved and refined using ion exchange processes to remove deleterious elements, for example, Ca, Na, B, and recrystallizing lithium hydroxide by evaporation and cooling followed by separation from the digestion liquor, washing and drying in a carbon dioxide free atmosphere.

The subsequent steps (c) may include a sodium sulfate crystallisation step.

The sodium sulfate crystallisation step may include adjusting the pH of the digestion liquor to a neutral pH.

The sodium sulfate crystallisation step may include adjusting the pH of the digestion liquor to a pH in a range of 2-10, typically pH 3-7.

The sodium sulfate crystallisation step may include precipitating sodium sulfate crystals by evaporating and/or cooling the digestion liquor.

The term "mined" ore is understood herein to include, but is not limited to, (a) run-of-mine material and (b) run-of-mine material that has been subjected to at least primary crushing or similar or further size reduction after the material has been mined and prior to being sorted.

The process may be carried out as a continuous series of steps that digest the jadarite concentrate and then process the digestion liquor to precipitate the above-described downstream products.

The invention is not confined to this process and the process may be carried out as a series of discrete process stages.

The invention also provides boric acid made by the process described above.

The invention also provides lithium carbonate made by the process described above.

The invention also provides lithium hydroxide made by the process described above.

The invention also provides sodium sulfate made by the process described above.

### BRIEF DESCRIPTION OF THE DRAWINGS

The present invention is described further with reference to the accompanying Figures, of which:
Figure 1 is a flow sheet that shows the steps of an embodiment of a process recovering valuable products from jadarite ore and other associated lithium and boron mineralizations in accordance with the invention, where the products include boric acid, lithium carbonate and sodium sulfate.
Figure 2 is a graph illustrating lithium and boron extractions in jaradite digestion test work in relation to an embodiment of the invention over a period of 14 days;
Figure 3 is a graph illustrating boron concentration in jadarite digestion test work in relation to an embodiment of the invention over a period of 14 days;
Figure 4 is a graph illustrating filtration rates (kg dry solids/m²/h) in jadarite digestion test work in relation to an embodiment of the invention;
Figure 5 is a graph illustrating the particle size distribution (PSD) of boric acid produced in test work in relation to an embodiment of the invention compared to commercially available boric acid;
Figure 6 is a microscope image of boric acid produced in test work in relation to an embodiment of the invention;
Figure 7 is a graph illustrating residual boron concentration from a boric acid crystalliser produced in test work in relation to an embodiment of the invention over a period of 16 days;
Figure 8 is a graph illustrating Fe, Ca and Mg in sodium sulfate product against maximum target specifications in test work in relation to an embodiment of the invention over a period of 14 days; and
Figure 9 is a graph illustrating the particle size distribution of sodium sulfate produced in test work in relation to an embodiment of the invention compared to a commercially available sodium sulfate; and
Figure 10 is a microscope image of sodium sulfate produced in test work in relation to an embodiment of the invention.

### DESCRIPTION OF EMBODIMENTS

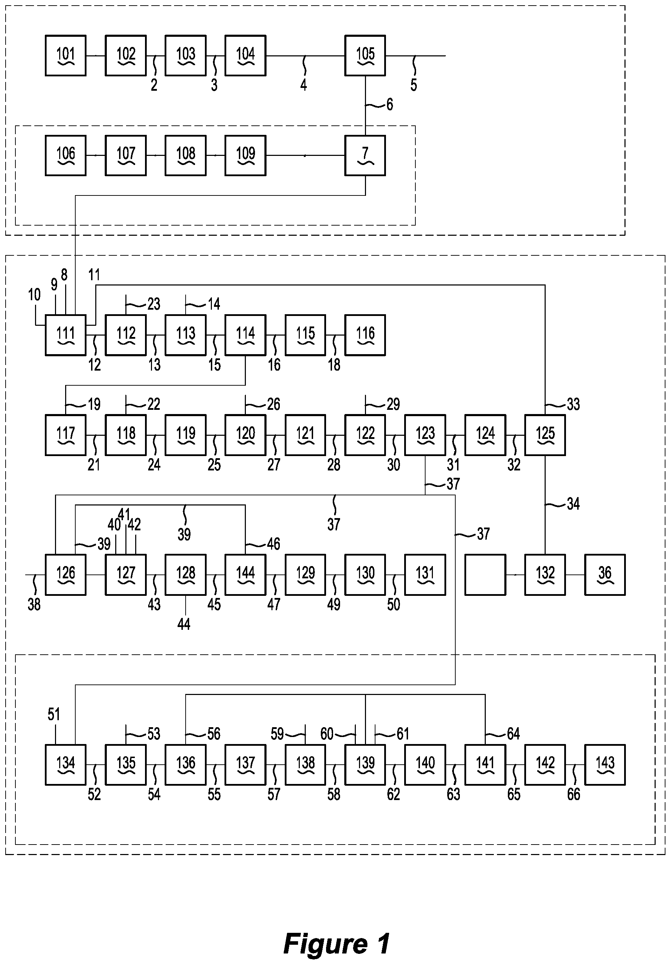

It is emphasised that Figure 1 shows an embodiment of a flow sheet of a process for recovering valuable products from jadarite ore in accordance with the invention and the invention is not limited to the flow sheet.

The skilled person will appreciate that the invention is not limited to the particular selections of process operating conditions and equipment shown in Figure 1 and described below with reference to Figure 1.

In particular, the invention is not limited to the particular sequence of precipitating valuable products from digestion liquor formed in the process.

The overall process recovery of the process shown in Figure 1 is about 82*%* (inclusive of beneficiation recovery) for both lithium and boron.

With reference to Figure 1, run-of-mine jadarite ore 101 is the feed material to the process flow sheet. As noted above, the term "jadarite ore" means ore containing jadarite mineral.

The flow sheet shown in Figure 1 includes the following main unit operations:
(a) comminuting and beneficiating the run-of-mine jadarite ore and producing a jadarite concentrate,
(b) digesting the concentrate in an acid and taking boron, lithium and sodium into solution in a digestion liquor, and
(c) subsequent steps to separate a series of valuable products (intermediate and final), including boron-containing, lithium-containing and sodium-containing products, and impurities from the digestion liquor.

### Comminution

The first step in the process is comminution of the run-of-mine ore 101.

As noted above, jadarite is a white, earthy monoclinic silicate mineral having a chemical formula expressed as LiNaB₃SiO₇(OH) or LiNaSiB₃O₇(OH) or Na₂OLi₂O(SiO₂)₂(B₂O₃)₃H₂O.

The jadarite mineralization in the run-of-mine ore exists predominantly as 0.5-2.0 mm nodules interspersed within a clay and dolomitic matrix. The flow sheet is based on, but not limited to, this jadarite mineralization.

It is emphasised that the invention extends to changes to the process operating conditions and equipment of Figure 1 to accommodate different jadarite mineralization.

The run-of-mine jadarite ore 101 is crushed to a top size of 2-5 mm, preferably 2.36 mm size, using multiple stage roll crushing/milling in steps 102/103 and produces firstly a crushed ore 2 and then a crushed/milled ore 3.

This size has been determined to be the most appropriate for the above-described jadarite mineralization based upon liberation studies and response to beneficiation. The invention is not limited to this size.

The choice of roll crushers is to ensure that the fines (-210 micrometres) generation is minimum as the fines are rejected in the beneficiation step.

### Beneficiation

Beneficiation includes an attrition scrubbing step 104 in which the crushed/milled run-of-mine ore 3 is attrition scrubbed under natural conditions in a water or other suitable aqueous medium at a high, nominally 50-65% solids concentration.

In the attrition scrubber, softer clays are slaked away and the harder jadarite mineral attrites the softer calcite and dolomite minerals. The beneficiation residence time is dependent on the mineralogy and can be up to 20 minutes to achieve the best balance between concentrate grade, jadarite recovery and carbonate rejection.

The resultant product 4 from the attrition scrubber is screened at 210 micrometres size in classifying step 105. Alternatively, by way of example, hydraulic separation could be used to achieve a similar goal using upward current classifiers or hydrocyclones or similar options.

The oversize stream 6 from the scrubber is the beneficiated product, i.e. a jadarite concentrate 7.

The undersize stream 5 from the scrubber is thickened and centrifuged or pressure filtered (not shown) to a paste consistency for either underground placement or impounding.

The beneficiation step is mineralogy dependent, but typically 80-90*%* of the jadarite in the run-of-mine ore 101 is in the jadarite concentrate 7.

Other beneficiation techniques can also be applied to produce a higher grade concentrate from the run-of-mine ore 101. If high grade ores such as NaB 106 are present, only comminution steps 107 and 108 may be necessary to produce a NaB concentrate 109.

The jadarite concentrate 7 is processed as received from the classifying step 105 in the digestion step 111.

In one other, although not the only other, embodiment, not shown in the Figure, the jadarite concentrate 7 from the classifying step 105 is wet milled in a closed-circuit ball mill to a nominal -149 micrometres size before being processed in the digestion step 111. The nominal -149 micrometres size was determined to be a suitable cut-off size for digestion of the jadarite mineralization. The resultant ball mill product is further thickened to 65-70*%* solids in high density thickeners in a thickening step (not shown) and forms the digestion feed.

### Digestion, Solubilization and Pregnant Leach Solution (PLS) Production

The jadarite concentrate 7 (and NaB concentrate 109 - if present) from the classifying step 105 is digested with concentrated sulfuric acid 8 (i.e. > 95*%* H₂SO₄) in the presence of recycled process liquors (stream 9 and mother liquor 11 in Figure 1) and water 10 in a digestion step 111. A slurry 12 is formed.

The amount of water 10 that is added is controlled to maintain a 20-25*%* boric acid concentration, or at 80-90% of saturation dependent on temperature in the slurry 12.

Digestion of the jadarite concentrate 7 occurs in a series of stirred tank reactors which include an internal draft tube, controlled at a temperature of between 50-100°C, preferably 80-95°C. Acid addition is carefully controlled to maintain the pH of the slurry between 1-5, preferably 2.0-3.8. Acid addition is in the high mixing zone in the draft tube to allow rapid dispersion and prevent any local variations in the pH. This technique retards silica dissolution and consequent polymerization which can lead to gelling of the digestion liquors over time.

In another embodiment not shown in Figure 1, rather than digestion in stirred tank reactors, upon reaction with sulfuric acid, the digest mix starts as a slurry and then quickly stiffens to a paste consistency in 1-2 minutes. This paste is then cured for over 60 minutes and yields a dry friable solid 15 as silica hydration reactions occur.

Given the mix behavior over time in the digestion process, a Broadfield mixerden digestor is one option. Tests by the digestor manufacturer and pilot testing have demonstrated suitability of this type of a machine for the ore. Broadfield digestors are commonly used in the manufacture of single superphosphate where flourapatite ore (phosphate rock) is acidulated with sulfuric acid and the reaction mix undergoes similar physical transformations.

During the reaction of jadarite ore with sulfuric acid, a large amount of CO₂ is released from the reaction of acid with the contained dolomite and calcite in the ore. The evolved carbon dioxide tends to create a foam. Along with CO₂, some amount of H₂S is liberated.

The digestor is operated under a negative pressure where evolved gases are collected and scrubbed for H₂S removal using a caustic solution.

The slurry 12 is subjected to a solid/liquid separation step 112 by being filtered in a series of centrifuges, pressure filters and vacuum filters with wash water not shown to yield a PLS 13 and gangue solids 23, which includes calcium sulfate.

The PLS 13 contains boron, lithium, and sodium in solution.

The following sections of the specification describe separating valuable products including boron-containing, lithium-containing and sodium-containing products, from the PLS 13.

### Boric Acid ("BA") Crystallization

The PLS 13 from the solid/liquid separation step 112 is evaporated if needed (not shown in the flow sheet) to a boric acid concentration of 20-25%.

The evaporated stream or the PLS 13 is treated with a combination of sodium dithionite, oxalic acid, di-sodium ethylene diamine tretraacetic acid and concentrated sulfuric acid in the range of 1-10 g/L, (identified as sulfuric acid 14 in the Figure), and then processed in 2-3 stages of flash cooling in step 113 to 25-35°C or lower temperatures to crystallize boric acid.

The boric acid product slurry 15 is filtered using a counter-current washing circuit comprised of vacuum and horizontal belt filters or pressure filters in step 114.

The moist boric acid crystals 16 containing 4-8*%* moisture are dried in a rotary dryer or a vibrating fluidized bed dryer at 70°C in step 115 and form a first marketable product 18. Gentle drying is required to prevent size degradation of the boric acid crystals and proper temperature control is needed to prevent dehydration of the boric acid molecule.

Anti-caking agents may be added to the dried boric acid product 116.

### Lime and Calcium Precipitation

The weak liquor stream 19 from the boric acid filtration step 114 is transferred to a lime precipitation step 117.

In this step, the weak liquor stream 19 is contacted with excess lime 20 at ambient temperature to precipitate impurities, including Mg, Al, Fe and other heavy metal hydroxides along with gypsum and silica, with the resultant stream being in the form of a slurry 21. The slurry 21 is separated into solids 22 and limed liquor 24 using a combination of vacuum and pressure filters and centrifuges in a multi-stage counter wash circuit with intermediate re-pulps in step 118.

Nearly 20*%* and in a number of instances up to 40*%* of the boron in the weak liquor stream 19 is precipitated as a calcium borate in the liming step 117. The conditions in this step are optimized to prevent lithium losses, minimize boron losses and achieve a near complete removal of the Mg, Al, heavy metal and silica impurities. A short residence time of less than 30 minutes may be sufficient. However, typically, longer residence times of 1 hour are required.

The limed liquor stream 24 is saturated with calcium and is at pH 10.5-12.5, typically pH 10.5-11.5.

The limed liquor stream 24 is optionally evaporated in step 119 to form a concentrated limed liquor 25.

Optionally, the concentrated limed liquor 25 is treated with a small amount of 30*%* soda ash solution 26 or carbon dioxide gas (not shown) to precipitate calcium as carbonate and a small amount of lithium (also as a carbonate) in a softening step 120 to ensure near complete removal of calcium in a stream 28.

The precipitated calcium and lithium carbonate solids in 27 are separated by filtration in step 121 to produce a softened liquor 28.

The separated calcium and lithium carbonates are recycled (not shown) to the liming step 117 to recover the precipitated lithium values.

Near complete removal of calcium is very important in this step 120 as the remaining calcium would otherwise contaminate the lithium carbonate product produced downstream in the process.

### Solvent Extraction of Boron (not shown in Figure)

In this optional step, the liquor 28 from the calcium precipitation and separation steps 120 and 121 is transferred to a solvent extraction step.

The solvent extraction step is used to recover any remaining boron as boric acid and to reduce boron content of the raffinate going forward to lithium carbonate crystallization such that the lithium carbonate product has <10 ppm boron impurity.

The solvent extraction step is conducted at ambient temperatures and employs two stages of extraction, two stages of stripping and a wash stage. Crud removal and treatment is included as customary. The extractant is a custom made aromatic chemical which has been industrially demonstrated to have very high selectivity towards boron. The extractant is used in a 1:3 ratio with an aliphatic carrier. Stripping is performed with sulfuric acid. Organic: aqueous ratios of 2-3:1 are used in both the extraction and stripping stages. Extraction and stripping residence times are short (< 2 minutes) and phase separation times are of the order of 4-5 minutes with tri-butyl phosphate used as a phase modifier.

The solvent extraction step produces a raffinate containing <100 ppm boron and a strip liquor containing 8 grams per liter of boron.

The solvent has limited selectivity towards lithium and any extracted lithium along with the boron in the strip liquor is recycled back to the digestion and solubilization step.

The raffinate from solvent extraction step is a very clean liquor essentially containing only sodium and lithium sulfates.

Solvent extraction is optional and would be considered if it is important to obtain a high purity.

In this case, liquor 28 from the calcium precipitation and separation step 121 proceeds to lithium carbonate crystallization. Without solvent extraction the lithium carbonate product can be optionally purified.

### Lithium Carbonate Crystallization

The softened liquor 28 is processed in a lithium carbonate precipitation step 122 in a reactive forced circulation evaporative crystallizer with mechanical vapor recompression (MVR) with the addition of sodium carbonate solution 29.

Alternatively, the crystallization step can be a rapid precipitation reaction in stirred tank reactors at temperature controlled at 70-100°C, preferably 90-100°C, with addition of sodium carbonate solution 29. Controlled crystallization yields higher purity product.

Due to the inverse solubility of lithium carbonate, low temperature rises have to be maintained in the heat exchangers to provide long wash-out cycles. Meta-stable zone width determinations in the laboratory as well as pilot testing have determined that the heat exchangers should be sized for a temperature rise of 1.5°C.

The crystallized lithium carbonate containing slurry 30 is separated from the mother liquor in a centrifuge separation step 123 with peeler centrifuges in a three-stage counter-current wash circuit with intermediate re-pulps.

The dewatered lithium carbonate cake 37 contains 15-25*%* moisture which can be directly dried in rotary or flash driers in step 129 (described below) - and form a technical grade marketable product 49.

### Purification of Lithium Carbonate

Further purification of lithium carbonate is accomplished by dissolving the dewatered lithium carbonate cake 37 in water while bubbling carbon dioxide 38 in a lithium carbonate digestion step 126.

The solution is then filtered to remove undissolved solids (not shown in Figure). Undesired cationic impurities such as Ca and Mg and anionic impurities such as B are removed sequentially using suitable specific ion exchange resins in step 127. The resin is regenerated using hydrochloric acid 40, sulfuric acid 41 and sodium hydroxide 42.

The purified solution 43 is then heated indirectly or directly with steam 44 to remove carbon dioxide and precipitate high purity lithium carbonate product in slurry 45 in a Battery Grade (BG) lithium carbonate crystallization step 128. The liberated carbon dioxide is captured and used in the dissolution step 126.

The dissolution step is preferably conducted cold and under pressure. The precipitation or carbon dioxide stripping is preferably conducted at high temperatures.

The hot slurry 45 is separated from the mother liquor in peeler centrifuges in a three-stage counter-current wash circuit with intermediate repulps to produce a wet lithium carbonate cake 47 in step 144. The separated mother liquor 46 is recycled to the lithium carbonate digestion step 126 as stream 39. The wet cake is dried in rotary or flash driers in step 129 - and forms a second marketable product 49.

The product 49 can be micrometre-sized in an air-swept pulverizer 130 to produce another size classification of the marketable product 50.

### Acidulation and Sodium Sulfate Crystallization

The liquor 31 after the lithium carbonate crystallization and solid -liquid separation steps 122 and 123 is acidified in an acidification step (not shown) with sulphuric acid to a pH of 2-3.5 to drive off all dissolved carbon dioxide. Subsequently, the pH is adjusted back to 4.5-9.0, typically 4.5-7.0.

The neutralized liquor is evaporated in a sodium sulfate crystallization step 124 with MVR to produce a slurry containing sodium sulfate crystals 32.

The sodium sulfate crystals 32 are dewatered in pusher centrifuges to 3-4*%* moisture in step 125. The moist sodium sulfate crystals 34 are dried in rotary dryers in step 132 and form a third marketable product 36.

The mother liquor 33 from the sodium sulfate crystallization and solid-liquid separation steps 124 and 125 is recycled to the ore digestion step 111. A portion of this stream 33 is bled for impurities control and can be recovered after concentration and rejection of impurities in an SSU unit (not shown).

### Conversion of Lithium Carbonate to Lithium Hydroxide

Lithium hydroxide is another marketable product that can be produced from this process.

In order to produce lithium hydroxide, wet lithium carbonate cake 37 or dry products 47 or 49 are slurried and reacted with calcium hydroxide 51 in a stirred tank reactor in the lithium hydroxide conversion step 134.

The reacted slurry 52 is filtered in step 135 to produce a lithium hydroxide solution 54.

The lithium hydroxide solution 54 is cooled and evaporated in the lithium hydroxide crystallization step 136 to yield lithium hydroxide crystal containing slurry 55 which are separated from the mother liquor by a suitable solid liquid separation technique in step 137.

The wet lithium hydroxide cake 57 can then dried under a carbon dioxide free atmosphere in step 142 to produce the final product.

The wet lithium hydroxide cake 57 can be further refined by re-dissolution with water 59 in step 138. Dissolved impurities are removed from the resultant slurry 58 using ion exchange in step 139 to produce a refined lithium hydroxide solution 62. The ion exchange resin is regenerated using hydrochloric acid 60 and sulfuric acid 61.

The refined lithium hydroxide solution 62 is cooled and evaporated in the BA (battery grade) lithium hydroxide crystallization step 140 to produce high purity lithium hydroxide crystals containing slurry 63.

This slurry 63 is separated from the mother liquor in centrifuges, step 141, to generate a wet battery grade lithium hydroxide 65 which is dried under a carbon dioxide free atmosphere in step 142 to produce the final battery grade lithium hydroxide product 66.

The mother liquor 64 from separation of battery grade lithium hydroxide crystals 65 is recycled as stream 56 to the first lithium hydroxide crystallization step 136 and used in regeneration of ion exchange resins in step 139.

### Glauber's salt (sodium sulfate decahydrate crystallization) (not shown in the Figure)

In another embodiment (not shown), sodium sulfate can be produced in different areas of the process. An advantage of Glauber's salt production is the removal of excess water from the process in form of the water of hydration associated with Glauber's salt. The areas where Glauber's salt production can occur are:
1) After boric acid crystallization and separation of boric acid crystals, liquor stream 19 along with other borate containing weak streams is cooled further to <15°C to produce crystals of sodium sulfate decahydrate and boric acid. The crystals are separated from the liquor using an appropriate solid-liquid separation technique and are recycled to the ore digestor in step 111. As the digester sodium sulfate concentration reaches saturation, solid sodium sulfate reports with the digestion residue after filtration. Boric acid stays in solution as it's concentration is controlled. In another embodiment, the Glauber's salt and boric acid containing slurry is subjected to froth flotation to separate boric acid in the froth phase and Glauber's salt as tailings. The boric acid froth is recycled to the digestor. The Glauber's salt tailings are separated from the liquor using an appropriate solid liquid separation technique such as a screen and either discarded with gangue or remelted and dehydrated to produce an anhydrous sodium sulfate product after further separation from liquor and drying. In one embodiment, froth flotation can also be replaced by a size separation device, typically screens, to achieve a separation at around 149 µm. Boric acid crystals are significantly finer than Glauber's salt crystals and thus boric acid can be concentrated in the screen underflows. The crystallized boric acid and Glauber's salt slurry after solids concentration can also be transferred to the reacidification step before sodium sulfate crystallization to prevent it from undergoing pH changes in the liming step which results in additional base consumption as the boric acid converts to meta-borate ion, some of which also precipitates in the liming step as calcium metaborate.
2) Liquor stream 24 can also be cooled to crystallize Glauber's salt and converted into anhydrous sodium sulfate as described above or discarded.
3) Liquor stream 31 can also be cooled to crystallize Glauber's salt and a portion converted into anhydrous sodium sulfate as described above or discarded.

### Test Work

The applicant has carried out extensive test work in relation to the invention. The test work includes three pilot plant campaigns that investigated the steps in the process of the invention.

The following description provides details of a sub-set of the third pilot plant test work.

The key findings of the third pilot plant campaign are as follows:
- The plant was operated consistently at target concentrations.
- Digestion operated with a high uptime (96*%*) and digestion chemistry was consistent with predictions from batch test work.
- Lithium and boron extractions were high and soluble losses of <1.5*%* Li were achieved in digestion.
- Demonstration of solid liquid separation and solute recovery associated with digestion residue process.
- Demonstration of commercial quality boric acid.
- Lithium carbonate precipitation operated as expected, with residual lithium concentrations on target.
- Significantly higher liming filtration rates were achieved.
- The post liming evaporator operated successfully.
- Liming achieved target magnesium removal, and boron losses were consistent with expectations. Soluble losses less than 1.5 % were regularly achieved.
- Operation of the sodium sulfate crystallisation circuit in a continuous mode produced on specification product.

### Beneficiation

The purpose of the beneficiation pilot plant test work was to test the effectiveness of the attrition scrubbing step 104 to produce a beneficiated concentrate on actual samples of jadarite ore.

The test work evaluated attrition scrubbing of jadarite ore samples for a range of attrition scrubbing times. Feed material for the scrubbing tests was prepared from -31.5 mm ore samples. 25 kg was jaw crushed at a 12.5 mm close side setting (CSS) and screened at 4 mm. The oversize was then jaw crushed at 6 mm CSS and screened at 4 mm. The oversize was then roll crushed at 3 mm nominal gap to 100*%* passing 4 mm. The samples were then wet screened at 212 microns. The wet screen undersize was subsampled for assay. Test charges were prepared from the oversize by rotary splitting. 1 kg attrition scrubs were performed on these samples at 65*%* solids for various times, 3, 6, 9 and 15 minutes. Products were collected, weighed and prepared for assay.

The text work established that the above attrition scrubbing test procedures were effective in terms of producing concentrates that had high concentrations of boron-containing and lithium-containing compounds.

### Digestion, Solubilization and Pregnant Leach Solution (PLS) Production

Pilot plant test work was carried out on samples of jadarite concentrates to assess digestion performance and filtration of the digestor output.

### Digestion performance

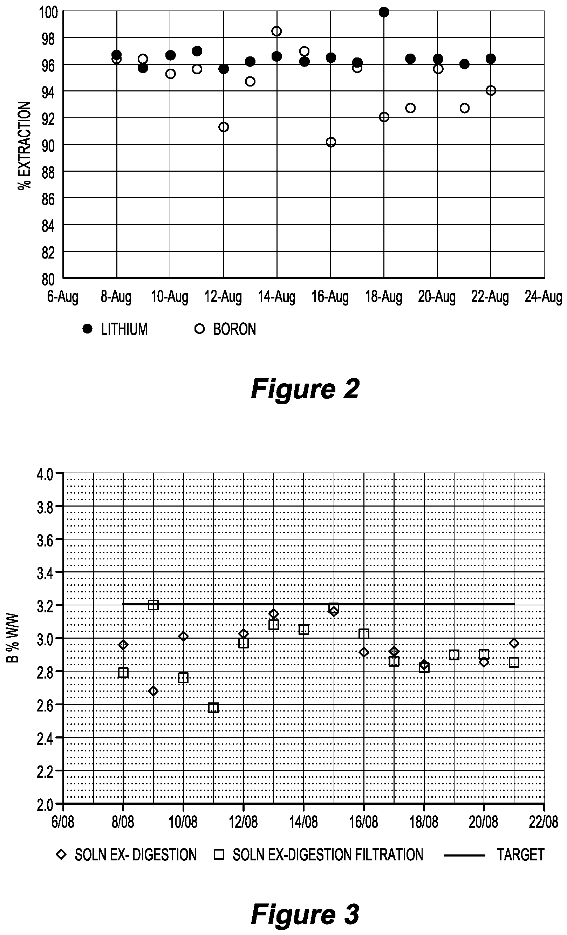

Pilot plant test work found that lithium extraction in digestion with concentrated sulfuric acid was consistently 96 to 97 *%* and boron extraction was around 96*%*. Figure 2 is an example of the test work.

Small amounts of coarse un-leached white nodules of jadarite in digestion residue were observed. Extended leaching of these un-leached jadarite nodules showed that additional lithium and boron could be extracted.

In the test work, digestion acid consumption averaged 357 kg/t.

In the test work, residue primary filtration, a hot pre-wash of the filter before primary filtration, and a hot filter feed pump (achieved via a pump submerged in a 90°C hot water bath) ensured that the boric acid concentration did not drop over the course of filtration so that the feed solution to boric acid crystallisation was at a target concentration. This is shown in Figure 3.

### Digestion Filtration

In the pilot plant test work, a coarse removal screen was used to remove material > 1mm.

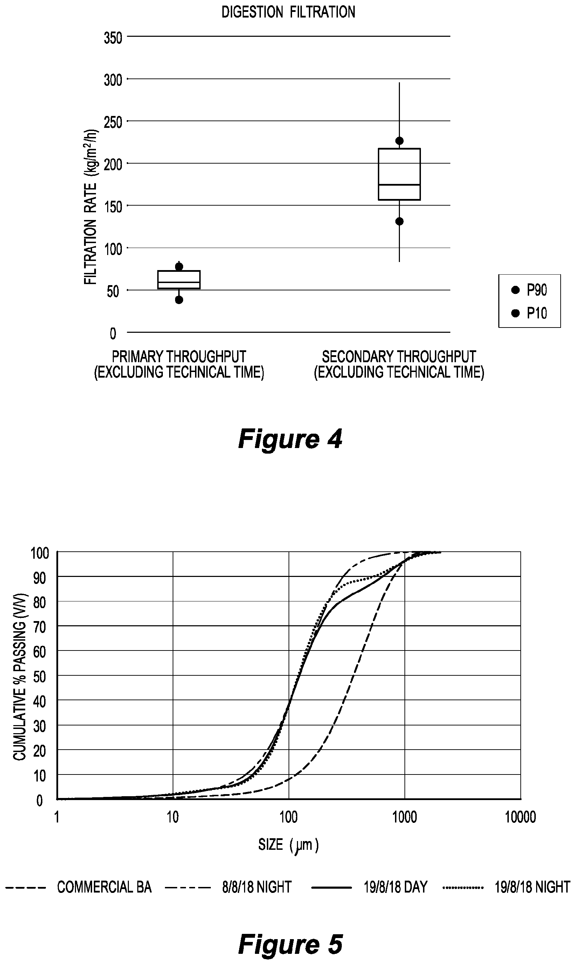

Primary filtration rates¹ were at around 59 kg dry solids/m²/h (Figure 4). Primary cake solids were typically 54 to 58 *%* solids (TDS corrected).
¹ Excluding technical time.
² The boric acid titration has an associated error, and for high purity boric acid this means that values over 100% can be reported. This is accepted in industry, and some product specifications are over 100%.

Final filtration rates (i.e. after a third re-pulp stage) were typically 175 kg dry solids/m²/h.

Final cake solids were very consistent at 61 to 63 % solids in the test work.

### Boric Acid ("BA") Crystallization

Pilot plant test work was carried out on precipitating boric acid from samples of pregnant leach liquor in a crystalliser.

In one series of tests, the purity of the boric acid product was 100.3*%* B(OH)₃ by titration².

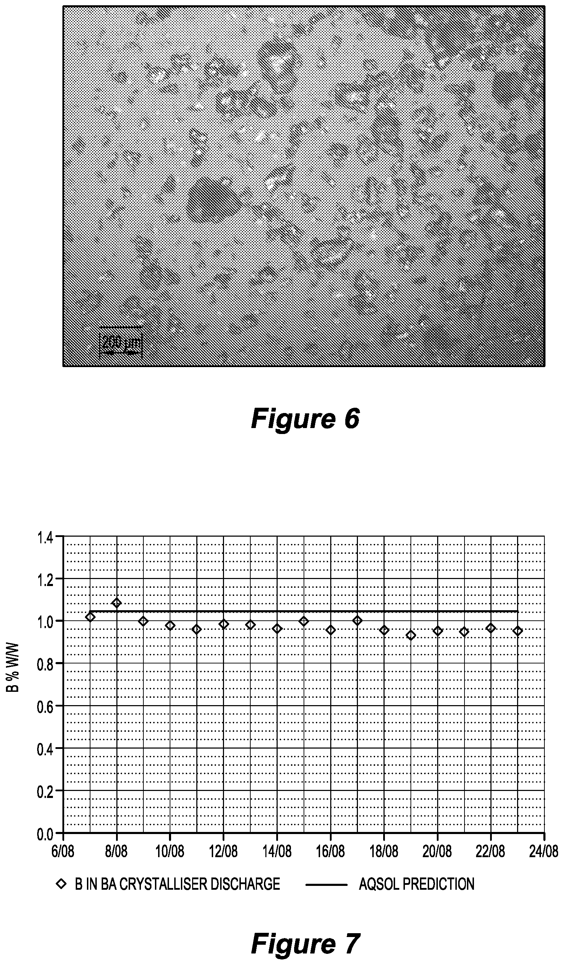

The crystal size of the boric acid product was finer than a commercially available boric acid product - see Figure 5. The Figure shows the particle size distributions for three samples and a commercially available boric acid product. Figure 6 is microscope image of a part of the boric acid product. The image shows crystals having a typical boric acid structure. The finer particle size distribution in Figure 5 and the crystal shape is attributable to the scale of the pilot plant and equipment selections for the scale of the pilot plant.

Concentrations of boron out of the crystalliser were consistently close to predicted levels, as shown in Figure 7.

In the test work, filtration of the boric acid slurry via vacuum pan filtration resulted in a final cake with 81 to 84*%* solids.

### Liming Filtration

Pilot plant test work was carried out to determine the efficiency of liming to remove magnesium and other impurities. It was found that liming achieved target magnesium removal, and boron losses were consistent with expectations. Soluble losses less than 1.5 % were regularly achieved.

In one series of tests, primary filtration rates for liming cake were 93 kg dry solids/m²/h. Primary liming cakes typically contained 40 to 55*%* solids (TDS adjusted). Final liming cake (i.e. after fourth re-pulp) filtered at 138 kg dry solids/m²/h, and had a final solids of 55 to 65*%*. This is in line with the expected commercial filter performance of 53.6*%* solids.

### Acidulation and Sodium Sulfate Crystallization

Pilot plant test work was carried out on precipitating sodium sulfate from samples of pregnant leach liquor.

In one series of tests, the sodium sulfate purity was 99.8 *%*.

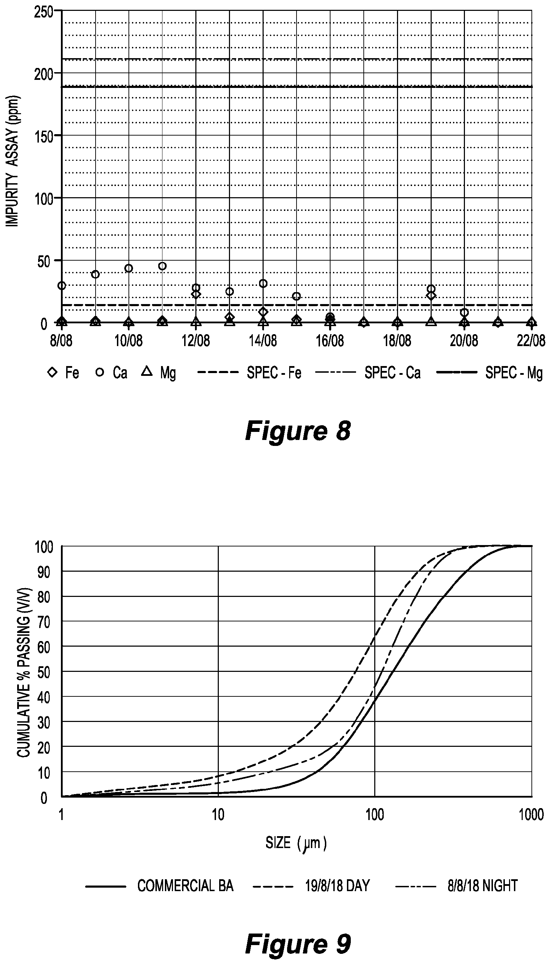

Impurity specifications for calcium, magnesium and chloride were all comfortably met, as shown in Figure 8.

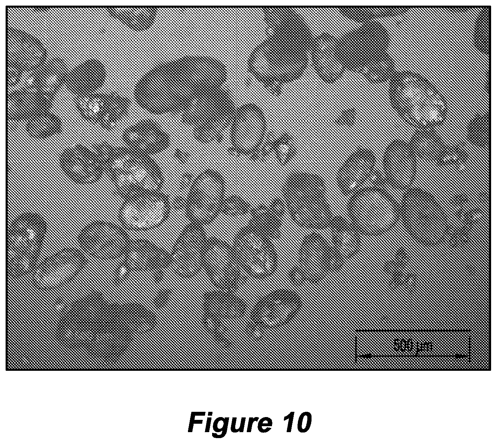

The crystals that were produced (Figure 9 and Figure 10) were very similar to sodium sulfate made in a commercial system, albeit slightly finer.

### Summary

The pilot plant test work described briefly above and the whole of the test work carried out by the applicant indicates that the process of the invention is an effective process.

### List of reference numerals

- 1 -: comminution
- 2 -: crushed ore
- 3 -: crushed/milled ore
- 4 -: resultant product from attrition scrubber
- 5 -: undersize stream from the scrubber
- 6 -: oversize stream from the scrubber
- 7 -: beneficiated product
- 8 -: concentrated sulphuric acid
- 9 -: recycled process liquors
- 10 -: water
- 11 -: mother liquor
- 12 -: slurry
- 13 -: pregnant leach solution (PLS)
- 14 -: sulfuric acid
- 15 -: dry friable solid / boric acid product slurry
- 16 -: boric acid crystals
- 18 -: first marketable solid
- 19 -: weak liquor stream
- 21 -: slurry
- 22 -: solids
- 23 -: gangue solids
- 24 -: limed liquor
- 25 -: concentrated limed liquor
- 26 -: soda ash solution
- 27 -: stream of precipitated calcium and lithium carbonate solids
- 28 -: liquor
- 29 -: sodium carbonate solution
- 30 -: crystalized lithium carbonate containing slurry
- 31 -: liquor
- 32 -: slurry containing sodium sulfate crystals
- 33 -: mother liquor
- 34 -: moist sodium sulfate crystals
- 36 -: product
- 37 -: dewatered lithium carbonate cake
- 38 -: carbon dioxide
- 39 -: recycled mother liquor
- 40 -: hydrochloric acid
- 41 -: sulfuric acid
- 42 -: sodium hydroxide
- 43 -: purified solution
- 44 -: steam
- 45 -: slurry
- 46 -: separated mother liquor
- 47 -: wet lithium carbonate cake
- 49 -: product
- 50 -: product
- 51 -: calcium hydroxide
- 52 -: slurry
- 53 -: residue
- 54 -: lithium hydroxide solution
- 55 -: lithium hydroxide crystal containing slurry
- 56 -: recycled mother liquor
- 57 -: wet lithium hydroxide cake
- 58 -: slurry
- 59 -: water
- 60 -: hydrochloric acid
- 61 -: sulfuric acid
- 62 -: refined lithium hydroxide solution
- 63 -: high purity lithium hydroxide crystals containing slurry
- 64 -: mother liquor
- 65 -: battery grade lithium hydroxide crystals
- 66 -: battery grade lithium hydroxide product
- 101 -: Jaradite ore
- 102 -: roll crushing/milling
- 103 -: roll crushing/milling
- 104 -: scrubbing
- 105 -: classifying
- 106 -: high grade ore
- 107 -: comminution
- 108 -: comminution
- 109 -: high grade ore concentrate
- 111 -: digestion step
- 112 -: solid/liquid separation
- 113 -: flash cooling
- 114 -: filtration
- 115 -: drying
- 116 -: dried boric acid product
- 117 -: lime precipitation
- 118 -: solid/liquid separation
- 119 -: evaporation
- 120 -: softening
- 121 -: filtration
- 122 -: lithium carbonate precipitation
- 123 -: centrifuge separation
- 124 -: sodium sulfate crystallization
- 125 -: dewatering
- 126 -: lithium carbonate digestion / dissolution
- 127 -: removal of cationic impurities
- 128 -: crystallization
- 129 -: drying
- 130 -: pulverization
- 131 -: product
- 132 -: drying
- 134 -: lithium hydroxide conversion
- 135 -: filtration
- 136 -: lithium hydroxide crystallization
- 137 -: solid liquid separation
- 138 -: re-dissolution
- 139 -: ion exchange
- 140 -: battery grade lithium hydroxide crystallization
- 141 -: separation
- 142 -: drying
- 144 -: separation
- 143 -: battery grade lithium hydroxide product

## Claims

1. A process for recovering valuable products from jadarite ore includes the steps of:
(a) beneficiating a mined or stockpiled jadarite ore and producing a jadarite concentrate,
(b) digesting the concentrate in an acid and taking boron and lithium into solution in a digestion liquor, and
(c) subsequent steps to separate valuable boron-containing and lithium-containing products from the digestion liquor.

2. The process defined in claim 1 wherein beneficiation step (a) includes attrition scrubbing mined or stockpiled jadarite ore in an aqueous or other suitable medium under high solids concentration such that harder minerals like jadarite preferentially slake and attrite softer gangue minerals such as clay, calcite, dolomite, ankerite etc. thereby preferentially reducing the size of these gangue minerals.

3. The process defined in claim 2 wherein beneficiation step (a) includes a size separation step that separates the gangue minerals degraded during the attrition scrubbing step from jadarite that remains during the attrition scrubbing step, thereby achieving a grade increase of jadarite in the concentrate.

4. The process defined in any one of the preceding claims wherein subsequent steps (c) include precipitating valuable products in the form of boron-containing and lithium-containing products successively from solution in the digestion liquor.

5. The process defined in claim 4 wherein subsequent steps (c) include precipitating boric acid, lithium hydroxide, sodium borate, and lithium carbonate successively from solution in the digestion liquor.

6. The process defined in any one of claims 1 to 5 wherein subsequent steps (c) include precipitating valuable products in the form of boric acid, lithium carbonate, and sodium sulfate successively from solution in the digestion liquor.

7. The process defined in claim 6 wherein subsequent steps (c) include a boric acid crystallisation step.

8. The process defined in claim 7 wherein the boric acid crystallisation step includes evaporating the digestion liquor to increase the boric acid concentration to a predetermined concentration.

9. The process defined in any one of claims 6 to 8 wherein subsequent steps (c) include a lithium carbonate crystallisation step.

10. The process defined in claim 9 wherein the lithium carbonate crystallisation step includes precipitating impurities including any one or more than one of Mg, Al and other heavy metal hydroxides, gypsum and silica from the digestion liquor and separating the precipitates from the digestion liquor.

11. The process defined in claim 9 wherein the lithium carbonate crystallisation step includes precipitating any remaining calcium from the digestion liquor and separating calcium precipitates from the digestion liquor.

12. The process defined in any one of claims 8 to 10 further include purifying a lithium carbonate product from the lithium carbonate crystallisation step by dissolution in presence of carbon dioxide, filtration to remove insoluble impurities, ion exchange or solvent extraction to remove dissolved impurities and re-precipitation of lithium carbonate by heating or steam stripping.

13. The process defined in any one of claims 8-11 includes converting lithium carbonate from the lithium carbonate crystallisation step to lithium hydroxide by reacting lithium carbonate with calcium hydroxide or sodium hydroxide, filtration to remove insoluble contaminants, and crystallization of lithium hydroxide by evaporation and cooling.

14. The process defined in claim 13 includes separating the lithium hydroxide crystals from the digestion liquor, washing the crystals to remove adhering impurities, and drying the crystals under a carbon dioxide free environment to produce a lithium hydroxide product.

## Patentansprüche

1. Verfahren zur Gewinnung von wertvollen Produkten aus Jadariterz, das die folgenden Schritte einschließt:
(a) Anreichern eines abgebauten oder aufgehaldeten Jadariterzes und Herstellen eines Jadaritkonzentrats,
(b) Aufschließen des Konzentrats in einer Säure und In-Lösung-Bringen von Bor und Lithium in einer Aufschlussflüssigkeit und
(c) anschließende Schritte zur Abtrennung wertvoller borhaltiger und lithiumhaltiger Produkte von der Aufschlussflüssigkeit.

2. Verfahren gemäß der Definition in Anspruch 1, wobei der Anreicherungsschritt (a) ein Attritionswaschen von abgebautem oder aufgehaldetem Jadariterz in einem wässrigen oder anderen geeigneten Medium bei einer hohen Feststoffkonzentration so einschließt, dass härtere Mineralien wie Jadarit vorzugsweise zerfallen und weichere Gangmineralien, wie Ton, Kalkspat, Dolomit, Ankerit etc., abgerieben werden, wodurch die Größe dieser Gangmineralien vorzugsweise reduziert wird.

3. Verfahren gemäß der Definition in Anspruch 2, wobei der Anreicherungsschritt (a) einen Größentrennschritt einschließt, der die beim Attritionswaschschritt zersetzten Gangmineralien von beim Attritionswaschschritt verbliebenem Jadarit trennt, wodurch eine Zunahme des Gehalts von Jadarit im Konzentrat erreicht wird.

4. Verfahren gemäß der Definition in einem der vorhergehenden Ansprüche, wobei nachfolgende Schritte (c) ein Ausfällen von wertvollen Produkten in Form von borhaltigen und lithiumhaltigen Produkten in der Aufschlusslösung nacheinander aus der Lösung einschließen.

5. Verfahren gemäß der Definition in Anspruch 4, wobei nachfolgende Schritte (c) ein Ausfällen von Borsäure, Lithiumhydroxid, Natriumborat und Lithiumcarbonat in der Aufschlusslösung nacheinander aus der Lösung einschließen.

6. Verfahren gemäß der Definition in einem der Ansprüche 1 bis 5, wobei nachfolgende Schritte (c) ein Ausfällen von wertvollen Produkten in Form von Borsäure, Lithiumcarbonat und Natriumsulfat in der Aufschlusslösung nacheinander aus der Lösung einschließen.

7. Verfahren gemäß der Definition in Anspruch 6, wobei nachfolgende Schritte (c) einen Borsäure-Kristallisationsschritt einschließen.

8. Verfahren gemäß der Definition in Anspruch 7, wobei der Borsäure-Kristallisationsschritt ein Abdampfen der Aufschlusslösung einschließt, um die Borsäurekonzentration zu einer vorbestimmten Konzentration zu erhöhen.

9. Verfahren gemäß der Definition in einem der Ansprüche 6 bis 8, wobei nachfolgende Schritte (c) einen Lithiumcarbonat-Kristallisationsschritt einschließen.

10. Verfahren gemäß der Definition in Anspruch 9, wobei der Lithiumcarbonat-Kristallisationsschritt ein Ausfällen von Verunreinigungen, die eines oder mehr als eines von Mg-, Al- und anderen Schwermetallhydroxiden, Gips und Siliciumdioxid einschließen, aus der Aufschlusslösung und ein Abtrennen der Niederschläge von der Aufschlusslösung einschließt.

11. Verfahren gemäß der Definition in Anspruch 9, wobei der Lithiumcarbonat-Kristallisationsschritt ein Ausfällen von verbliebenem Calcium aus der Aufschlusslösung und ein Abtrennen von Calciumniederschlägen von der Aufschlusslösung einschließt.

12. Verfahren gemäß der Definition in einem der Ansprüche 8 bis 10, das weiterhin ein Reinigen eines Lithiumcarbonat-Produkts aus dem Lithiumcarbonat-Kristallisationsschritt durch ein Lösen in Gegenwart von Kohlendioxid, eine Filtration zur Entfernung von unlöslichen Verunreinigungen, einen Ionenaustausch oder eine Lösungsmittelextraktion zur Entfernung von gelösten Verunreinigungen und ein erneutes Ausfällen von Lithiumcarbonat durch ein Erwärmen oder Dampfstrippen einschließt.

13. Verfahren gemäß der Definition in einem der Ansprüche 8-11, der ein Umwandeln von Lithiumcarbonat aus dem Lithiumcarbonat-Kristallisationsschritt zu Lithiumhydroxid durch das Umsetzen von Lithiumcarbonat mit Calciumhydroxid oder Natriumhydroxid, eine Filtration zur Entfernung von unlöslichen Verunreinigungen und eine Kristallisation von Lithiumhydroxid durch Abdampfen und Abkühlen einschließt.

14. Verfahren gemäß der Definition in Anspruch 13, welches ein Abtrennen der Lithiumhydroxid-Kristalle von der Aufschlusslösung, ein Waschen der Kristalle zur Entfernung von anhaftenden Verunreinigungen und ein Trocknen der Kristalle unter einer Kohlendioxid-freien Umgebung einschließt, wodurch ein Lithiumhydroxid-Produkt erzeugt wird.

## Revendications

1. Procédé pour la récupération de produits de valeur à partir de minerai de jadarite comprenant les étapes de :
(a) enrichissement d'un minerai de jadarite miné ou stocké et production d'un concentré de jadarite,
(b) digestion du concentré dans un acide et prise de bore et de lithium en solution dans une liqueur de digestion, et
(c) des étapes subséquentes de séparation de produits de valeur contenant du bore et contenant du lithium depuis la liqueur de digestion.

2. Procédé défini dans la revendication 1, l'étape d'enrichissement (a) comprenant un nettoyage par attrition de minerai de jadarite miné ou stocké dans un milieu aqueux ou un autre milieu approprié sous une concentration en solides élevée de sorte que des minéraux plus durs tels que la jadarite préférentiellement éteignent et font subir une attrition à des minéraux de gangue plus souples tels que l'argile, la calcite, la dolomite, l'ankérite, etc. réduisant ainsi préférentiellement la taille de ces minéraux de gangue.

3. Procédé défini dans la revendication 2, l'étape d'enrichissement (a) comprenant une étape de séparation par taille qui sépare les minéraux de gangue dégradés pendant l'étape de nettoyage par attrition de la jadarite qui reste pendant l'étape de nettoyage par attrition, obtenant ainsi une augmentation de qualité de la jadarite dans le concentré.

4. Procédé défini dans l'une quelconque des revendications précédentes, les étapes subséquentes (c) comprenant une précipitation de produits de valeur sous la forme de produits contenant du bore et contenant du lithium successivement d'une solution dans la liqueur de digestion.

5. Procédé défini dans la revendication 4, les étapes subséquentes (c) comprenant une précipitation d'acide borique, d'hydroxyde de lithium, de borate de sodium et de carbonate de lithium successivement d'une solution dans la liqueur de digestion.

6. Procédé défini dans l'une quelconque des revendications 1 à 5, les étapes subséquentes (c) comprenant une précipitation de produits de valeur sous la forme d'acide borique, de carbonate de lithium et de sulfate de sodium successivement d'une solution dans la liqueur de digestion.

7. Procédé défini dans la revendication 6, les étapes subséquentes (c) comprenant une étape de cristallisation d'acide borique.

8. Procédé défini dans la revendication 7, l'étape de cristallisation d'acide borique comprenant une évaporation de la liqueur de digestion pour augmenter la concentration en acide borique jusqu'à une concentration prédéterminée.

9. Procédé défini dans l'une quelconque des revendications 6 à 8, les étapes subséquentes (c) comprenant une étape de cristallisation de carbonate de lithium.

10. Procédé défini dans la revendication 9, l'étape de cristallisation de carbonate de lithium comprenant une précipitation d'impuretés comprenant l'un quelconque ou plusieurs parmi Mg, Al et d'autres hydroxydes de métaux lourds, le gypse et la silice de la liqueur de digestion et une séparation des précipités depuis la liqueur de digestion.

11. Procédé défini dans la revendication 9, l'étape de cristallisation de carbonate de lithium comprenant une précipitation de tout calcium restant depuis la liqueur de digestion et une séparation de précipités de calcium depuis la liqueur de digestion.

12. Procédé défini dans l'une quelconque des revendications 8 à 10 comprenant en outre une purification d'un produit de carbonate de lithium provenant de l'étape de cristallisation de carbonate de lithium par dissolution en présence de dioxyde de carbone, filtration pour éliminer des impuretés insolubles, échanges d'ions ou extraction au solvant pour éliminer des impuretés dissoutes et re-précipitation de carbonate de lithium par chauffage ou strippage à la vapeur.

13. Procédé défini dans l'une quelconque des revendications 8 à 11, comprenant la conversion de carbonate de lithium provenant de l'étape de cristallisation de carbonate de lithium en hydroxyde de lithium par mise en réaction de carbonate de lithium avec de l'hydroxyde de calcium ou de l'hydroxyde de sodium, filtration pour éliminer des contaminants insolubles, et cristallisation d'hydroxyde de lithium par évaporation et refroidissement.

14. Procédé défini dans la revendication 13 comprenant une séparation des cristaux d'hydroxyde de lithium de la liqueur de digestion, un lavage des cristaux pour éliminer des impuretés collantes, et un séchage des cristaux dans un environnement exempt de dioxyde de carbone pour produire un produit d'hydroxyde de lithium.
